# EUROPÄISCHE PATENTSCHRIFT

(11) **EP 0 650 860 B1**
(45) Veröffentlichungstag und Bekanntmachung des Hinweises auf die Patenterteilung: **27.08.1997**
(21) Anmeldenummer: 94116458.4
(22) Anmeldetag: 19.10.1994
(51) Int. Cl.: B60G 21/05, B21D 53/90

(54) **Geschweisste Kraftfahrzeug-Hinterachse**
Welded rear axle for motor vehicle
Train arrière soudé pour véhicules automobiles

(30) Priorität: 30.10.1993 DE 4337242
(43) Veröffentlichungstag der Anmeldung: 03.05.1995
(73) Patentinhaber: ADAM OPEL AG, 65423 Rüsselsheim (DE)
(72) Erfinder: Schmidt, Rudolf, D-65428 Rüsselsheim (DE)
(74) Vertreter: Kümpfel, Heinz, Dipl.-Ing.

(56) Entgegenhaltungen:
- EP-A- 0 229 576
- DE-A- 3 909 916
- DE-A- 4 024 256
- US-A- 3 583 188
- US-A- 4 095 450

## Beschreibung

Die Erfindung bezieht sich auf eine geschweißte Kraftfahrzeug-Hinterachse mit den im Oberbegriff des Patentanspruchs 1 angegebenen Merkmalen, die aus der schrift EP-A-0 229 576 bekannt sind.

Bekannte Kraftfahrzeug-Hinterachsen bestehen aus zumindest einem Grundkörper, der elastisch an einem Wagenkasten (Rahmen) anlenkbar ist. Dies trifft sowohl für Verbundlenker- wie auch für Schräglenker-Hinterachsen zu. Am Grundkörper sind Radträger sowie weitere Bauelemente (wie Achsschenkel, Lenker, Stoßdämpfer, Federn) verschweißt oder anderweitig gelagert. Den Stand der Technik hierzu repräsentieren beispielsweise die DE-OS 40 24 256, EP-PS 0 229 576, EP-OS 0 430 728, EP-PS 0 389 363, EP-PS 0 249 537 oder die DE-PS 38 33 954 (zwei Grundkörper vorhanden).

Im allgemeinen sind die Grundkörper der Hinterachsen Stahl-Hohlkörper, an denen endseitig die Radträger verschweißt und weitere Aufnahmen vorzusehen sind. Im Falle von Verbundlenker-Hinterachsen ist zur Halterung der beiden Radträger beispielsweise ein Rohr vorgesehen, dessen Enden abgewinkelt sind. Der mittlere Bereich des Rohres ist biegesteif aber verdrehweich ausgeführt. Dazu werden spezielle Querschnittsflächen geschaffen, wobei diese insbesondere in der EP-PS 0 249 537 und der EP-PS 0 229 576 beschrieben sind.

Ein Hinterachs-Grundkörper anderer Ausführung ist in der EP-OS 0 430 728 beschrieben. Bei diesem findet Stahlblech als Ausgangsmaterial Anwendung. Letztlich wird aber eine mit den anderen Varianten vergleichbare Achsform erzielt.

Allen bekannten Hinterachsen für Kraftfahrzeuge gemeinsam ist, daß ein großer Herstellungsaufwand bei hohen Anforderungen an die Fertigungsgenauigkeit betrieben werden muß. Die Schaffung der gewünschten Querschnittsflächen zur Aufnahme der weiteren Bauelemente sowie des Achsquerschnitts im mittleren Bereich des Grundkörpers erfordert viele Arbeitsschritte. Da mit vertretbarem Aufwand keine optimalen Aufnahmen am Grundkörper herstellbar sind, ist die Verschweißung der Radträger und sonstiger Elemente problematisch. Bereichsweise müssen materialschwächende Schweißnähte gelegt werden, wobei sich die genaue Positionierung der genannten Elemente als schwierig erweist.

Aufgabe der Erfindung ist es, eine kostengünstige Kraftfahrzeug-Hinterachse zu schaffen, die hohen Anforderungen an die Fertigungsgenauigkeit genügt, geringen Fertigungsaufwand erfordert, an der optimal und mit wenig Aufwand zusätzliche Bauelemente zu lagern sind und die alle funktionellen Anforderungen erfüllt.

Zur Lösung dieser Aufgabe zeichnet sich die erfindungsgemäße Kraftfahrzeug-Hinterachse durch die im Kennzeichen des Patentanspruchs 1 angegebenen Merkmale aus. Weitere vorteilhafte Ausgestaltungen ergeben sich aus den Patentansprüchen 2 bis 6.

Die geschweißte Kraftfahrzeug-Hinterachse zeichnet sich besonders durch die Verwendung eines Grundkörpers aus, welcher mittels hydraulischem Innenhochdruck-Umformverfahrens geschaffen wurde und eine nicht konstante Wandstärke und Querschnittsgeometrie aufweist. Die Querschnittsgeometrie genügt über die gesamte Länge des Grundkörpers den jeweils bestehenden Ansprüchen. Gleiches gilt für die Wandstärke des Grundkörpers. Das heißt, daß das Material des Grundkörpers in optimaler Weise ausgenutzt wird und eine besonders leichte, funktionell optimierte Konstruktion möglich ist. Insbesondere ist von Bedeutung, daß Aufnahmen für an seitlichen Bereichen des Grundkörpers zu lagernde Bauelemente in nur einem Arbeitsgang bei der Herstellung des Grundkörpers geschaffen werden, derart, daß sich die Anbringung dieser Bauelemente besonders einfach gestaltet. Letztlich müssen nur wenige richtungsoptimierte Schweißverbindungen geschaffen werden.

Ein weiterer Vorteil bei der Fertigung des Grundkörpers mittels hydraulischem Innenhochdruck-Umformverfahrens besteht darin, daß niederlegiertes, kostentgünstiges Rohrmaterial Verwendung finden kann. Beispielsweise kann Rohr mit kreisringförmiger Querschnittsfläche grob vorgebogen und danach durch "Hydroforming" in die Endform überführt werden. Da sich alle Querschnitts- und Wandstärkenveränderungen durch homogene Übergänge auszeichnen sind auch keine die Stabilität des Grundkörpers negativ beeinflussenden Kerbwirkungen fertigungstechnisch bedingt, wie dies beim herkömmlichen mechanischen Pressen nahezu unvermeidbar ist. Wird das Rohrmaterial durch hohen hydraulischen Innendruck gegen den Formhohlraum eines Gesenkes gepreßt, schmiegt es sich exakt (hohe Fertigungsgenauigkeit) an diesen an, behält dabei gute Gefügeeigenschaften und je nach der Höhe des Innendrucks findet sogar ein Härtungsprozeß statt.

Verbundlenker-Hinterachsen zeichnen sich dadurch aus, daß ein mittlerer Abschnitt des Grundkörpers biegesteif aber verdrehweich ausgebildet ist. Dazu ist in diesem Abschnitt des Grundkörpers eine besondere Querschnittsfläche vorzusehen. Es ist möglich diese bereits vor dem "Hydroforming" zu schaffen und beim "Hydroforming" nur zu halten (wobei eine Optimierung stattfinden kann). Andererseits ist es aber auch sinnvoll, diesen speziell erforderlichen Querschnitt in nur einem Arbeitsgang beim hydraulischen Innenhochdruck-Umformen herzustellen. Das ist möglich, wenn als Fertigungsmethode eine an sich bekannte Kombination von mechanischem Pressen mit hydraulischem Innenhochdruck-Umformen angewendet wird. Auch der mittlere Bereich des Grundkörpers weist dann die o. g. Vorteile auf, wobei er allen funktionellen Anforderungen genügt.

Die Erfindung wird anhand eines Ausführungsbeispiels näher beschrieben. Dabei handelt es sich um eine geschweißte Verbundlenker-Hinterachse. Die Vorteile der erfindungsgemäßen Achsausbildung gelten aber ebenso für Schräglenker-Hinterachsen, deren Grundkörper auch durch "Hydroforming" optimal zu gestalten ist. Die Erläuterung des Ausführungsbeispiels erfolgt unter Bezugnahme auf Zeichnungen, in denen zeigt:
- Fig. 1: Gesamtansicht einer geschweißten Kraftfahrzeug-Hinterachse mit daran gelagerten Bauelementen in schematischer Darstellungsweise;
- Fig. 2: Grundkörper der Hinterachse nach Figur 1;
- Fig. 3: Schnitt III-III aus Figur 2;
- Fig. 4: Schnitt IV-IV aus Figur 2;
- Fig. 5: Schnitt V-V aus Figur 2;
- Fig. 6: Schnitt durch einen teilweise in einem Formhohlraum liegenden Rohling, der durch "Hydroforming" zu einem Grundkörper nach Figur 2 umgeformt wird;
- Fig. 7: Schnitt durch den im Formhohlraum liegenden Grundkörper nach erfolgtem "Hydroforming".

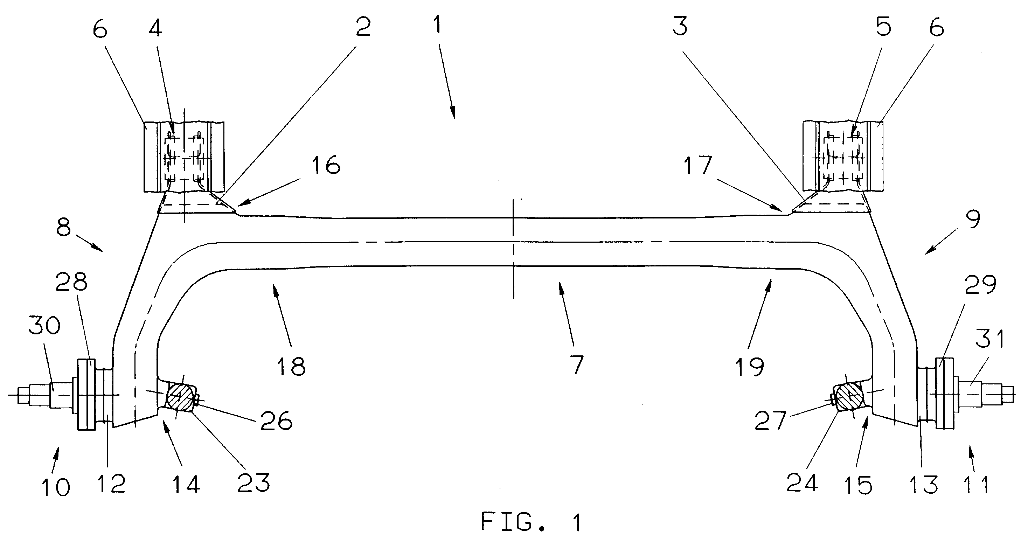

In Figur 1 sind schematisch die wesentlichen Details einer Verbundlenker-Hinterachse gezeigt. Sie besteht aus einem einstückigen Grundkörper 1 in allgemein U-förmiger Ausbildung. Am Grundkörper 1 sind zwei Halterungen 2, 3 für Fassungen 4, 5 verschweißt. Diese dienen zur Lagerung des Grundkörpers 1 an einem Hinterrahmen 6 eines Wagenkastens des Kraftfahrzeugs, welcher nur andeutungsweise gezeigt ist.

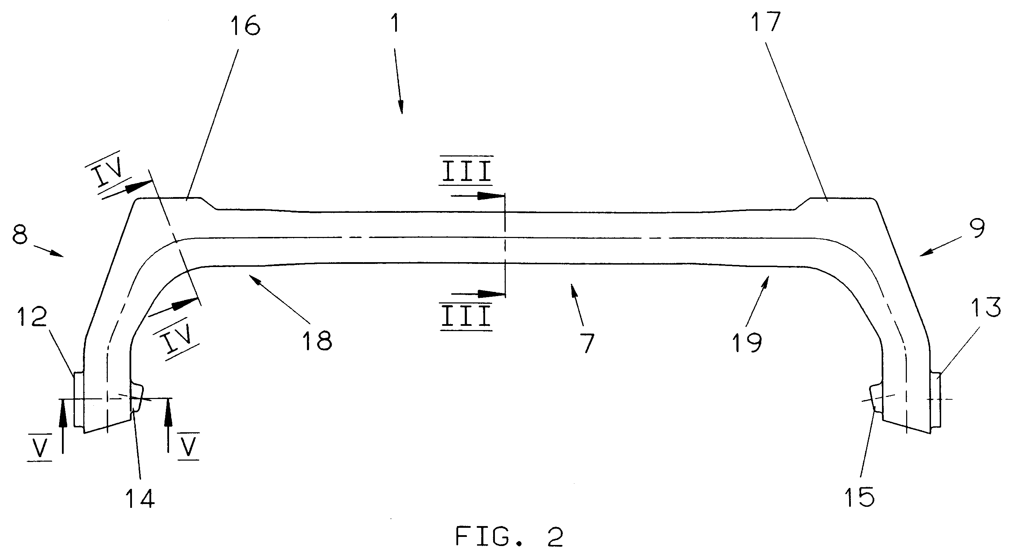

In Figur 2 ist ausschließlich der Grundkörper 1 gezeigt, der erfindungsgemäß ein mittels hydraulischem Innenhochdruck-Umformverfahrens geschaffener Hohlkörper mit nicht konstanter Wandstärke und Querschnittsgeometrie ist. Als kostengünstiges Ausgangsmaterial kommt ein grob vorgebogenes Rohr mit kreisringförmiger Querschnittsfläche zur Anwendung. Der Grundkörper 1 für die Verbundlenker-Hinterachse besteht aus einem mittleren Bereich 7 und davon winklig abragenden seitlichen Abschnitten 8, 9. Eine bekannte Forderung besteht darin, daß der mittlere Bereich 7 biegesteif aber verdrehweich auszuführen ist. Aus diesem Grund ist der Querschnitt des Rohres in diesem Bereich 7 zu verändern. Dies kann vor dem eigentlichen hydraulischen Innenhochdruck-Umformen erfolgen oder aber in nur einem, kombinierten Arbeitsgang vorgenommen werden. Beim "Hydroforming" wird also entweder der Querschnitt im mittleren Bereich nur gehalten (Aufrechterhaltung eines bereits vorhandenen Querschnitts) oder der gewünschte Querschnitt wird durch mechanisches Pressen in Kombination mit hydraulischem Innenhochdruck besonders vorteilhaft erzeugt. Die Form des Grundkörpers 1 ist so exakt allen Erfordernissen anzupassen. Dies betrifft neben der Querschnittsfläche im mittleren Bereich 7 auch insbesondere die Form der seitlichen Abschnitte 8, 9. Dort sind Radträger 10, 11 zu verschweißen und Aufnahmen 12 bis 17 für die Radträger 10, 11 und weitere, die Achsbewegungen bestimmende Bauelemente vorzusehen. Die Halterung bzw. Lagerung dieser Bauelemente am Grundkörper 1 soll mit möglichst geringem Aufwand bei wenig Schweißbedarf erfolgen, wobei funktionelle Aspekte zu beachten und Festigkeitsanforderungen zu berücksichtigen sind. Durch das "Hydroforming" wird das Rohr im Bereich der Aufnahmen 12 bis 17 expandiert. In Bereichen besonderer Festigkeitsanforderungen wird der Querschnitt des ursprünglichen Rohres verändert und Material wird während des "Hydroformens" "nachgeschoben". Es kann also gezielt Material an hochbelasteten Stellen der seitlichen Abschnitte 8, 9 angepackt werden, wenn dies beispielsweise im Bereich der Aufnahmen 12 bis 17 erforderlich ist. Letztlich wird das zum Einsatz kommende Material also voll ausgenutzt und ein gewichtsoptimierter Grundkörper 1 kann weiter zu der geschweißten Kraftfahrzeug-Hinterachse verarbeitet werden.

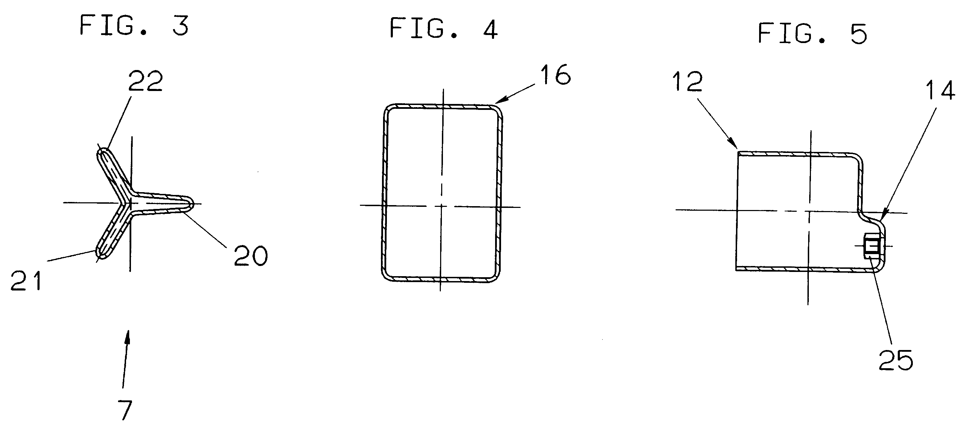

Aus den Figuren 3, 4 und 5 sind Querschnittsflächen des Grundkörpers 1 ersichtlich, wie sie durch das "Hydroforming" geschaffen wurden. Der ursprüngliche Rohrquerschnitt wird nur in Bereichen 18, 19 des Grundkörpers 1 annähernd erhalten. Der mittlere Bereich 7 des Grundkörpers 1 hat die biegesteife aber verdrehweiche Querschnittsausbildung. Dieser Querschnitt ist sternförmig ausgebildet, wobei drei Querschnittsflügel 20, 21, 22 geformt wurden, was sich als sehr günstig erwiesen hat. Zur Herstellung dieser Querschnittsfläche folgen weiter unten detaillierte Ausführungen.

In den Eckbereich zwischen dem mittleren Bereich 7 und den seitlichen Abschnitten 8, 9 des Grundkörpers 1 sind die Aufnahmen 16, 17 vorgesehen, an denen die Halterungen 2, 3 für die Fassungen 4, 5 zu verschweißen sind. Der Grundkörper 1 hat hier bereits eine rechteckförmige Querschnittsfläche. Die Halterungen 2, 3 können auf die Aufnahmen 16, 17 aufgesteckt und so exakt positioniert werden, bevor sie zu verschweißen sind. Die Übergänge zwischen dem sternförmigen Querschnitt und den kreisringförmigen Querschnitten in den Bereichen 18, 19 sowie zu den rechteckförmigen Querschnitten im Bereich der Aufnahmen 16, 17 sind homogen, also ohne Kerbwirkungen verursachende Kanten gestaltet. Die stabile, kastenförmige Querschnittsfläche setzt sich fort in den seitlichen Abschnitten 8, 9 des Grundkörpers 1 bis zu den ausgeformten Aufnahmen 12, 13 für die Radträger 10, 11 und zu den Aufnahmen 14, 15 für Feder-Dämpfer-Baugruppen, von denen nur andeutungsweise Lageraugen 23, 24 gezeigt sind. Im Bereich der Aufnahmen 12 bis 15 können je nach berechneter Belastung Materialverstärkungen (vergrößerte Wandstärke) vorgesehen sein, wie dies aus Figur 5 ersichtlich ist. In den Aufnahmen 14, 15 ist je eine Schweißmutter 25 angeordnet. Hier können Lagerbolzen 26, 27 verschraubt werden. Die Wandstärke des Grundkörpers 1 ist im Bereich der Aufnahmen 14, 15 gegenüber den sonstigen Bereichen verstärkt worden.

An den ebenflächigen Aufnahmen 12, 13 sind die Radträger 10, 11 bildende Trägerplatten 28, 29 verschweißt und mit Achszapfen 30, 31 verschraubt. Hier sind keine Materialverstärkungen erforderlich, da die Stabilität über die Trägerplatten 28, 29 beeinflußbar ist. Wichtig ist hier bei der Formgestaltung des Grundkörpers 1, daß zur folgenden Verschweißung optimale Voraussetzungen zu schaffen sind, später also möglichst kurze, gut zugängliche Schweißnähte anzubringen sind. Es ist auch möglich, bauchige Aufnahmen für rohrförmige Radträger zu formen. Im Ausführungsbeispiel wurde die Stirnfläche der Aufnahmen 12, 13 nach dem "Hydroforming" abgetrennt und die Trägerplatten 28, 29 sind dort reibverschweißt.

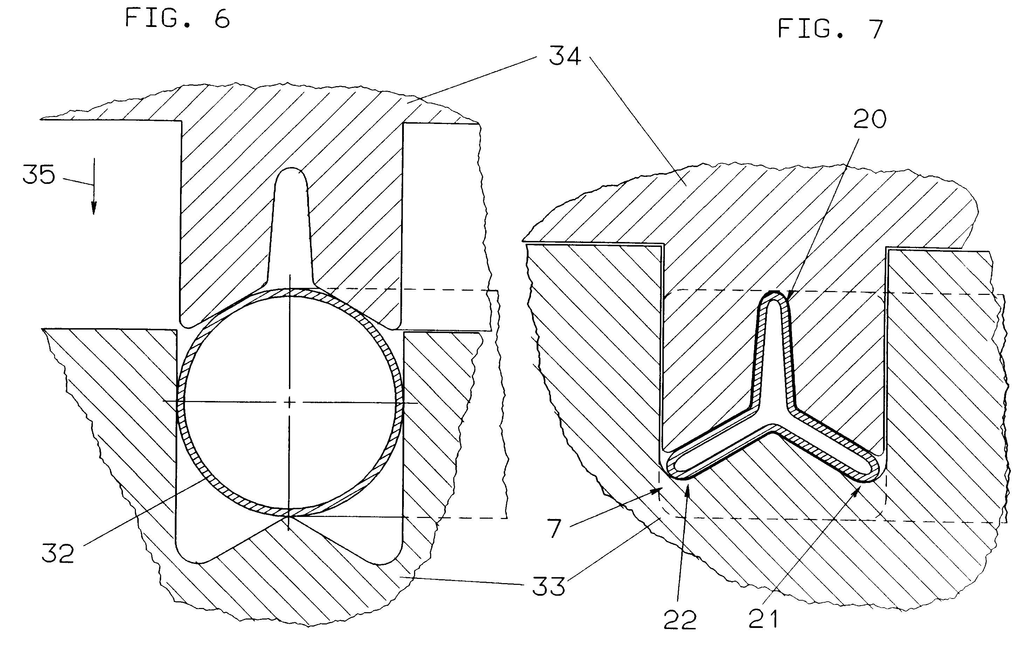

Die geschweißte Kraftfahrzeug-Hinterachse nach der Erfindung zeichnet sich insbesondere durch einen leichten, im mittleren Bereich 7 verdrehweichen Grundkörper 1 aus, der alle Aufnahmen 12 bis 17 aufweist und damit eine einfache Lagerung bzw. Halterung der Radträger 10, 11, der Feder-Dämpfer-Baugruppen sowie der Halterungen 2, 3 ermöglicht. Der Grundkörper 1 ist durch "Hydroforming" in nur einem Arbeitsgang äußerst ökonomisch herstellbar, was im folgenden mit Bezug auf die Figuren 6 und 7 näher beschrieben wird:

Der in den Figuren 6 und 7 gezeigte Schnitt liegt etwa wie der Schnitt III-III in Figur 2, zeigt also den mittleren Bereich 7 des Grundkörpers 1 während zweier Phasen seiner Herstellung. Dabei wird ein grob vorgebogenes Rohr 32 in ein unteres Teil 33 einer Form eingelegt. Das Rohr 32 ist insgesamt länger als der in Figur 2 gezeigte Grundkörper 1 und wird an beiden Enden abgedichtet. Möglichkeiten dazu sind allgemein bekannt. Es ist im Anschluß daran möglich, Luft aus dem Rohr 32 zu pressen und es mit Hydraulikflüssigkeit zu füllen sowie diese mit Druck zu beaufschlagen. Darauf folgend wird ein oberes Teil 34 der Form in Richtung des Pfeils 35 nach unten bewegt. Das Rohr 32 wird mechanisch verformt. Dabei wirkt der hydraulische Innendruck, der über Ventile einstellbar ist, als Gegendruck. Durch den vorhandenen Innendruck legt sich das Rohrmaterial bereits relativ exakt an die Innenkontur des Formhohlraumes an, der von den Teilen 33, 34 der Form definiert wird. Es bilden sich keine Materialfalten und das Material verklemmt auch nicht zwischen den Seitenwänden der Teile 33, 34.

Nachdem das Teil 34 der Form annähernd in die in Figur 7 gezeigte Position überführt ist, wird der hydraulische Innendruck erhöht, bis das Rohrmaterial beginnt, sich plastisch zu verformen (zu fließen beginnt). Das Material legt sich exakt an die Innenkonturen des Formhohlraumes an. Der gezeigte Bereich des Formhohlraumes ist so gestaltet, daß durch ihn die drei Flügel 20, 21, 22 des sternförmigen Profils (Figur 3) gebildet werden. Weitere Bereiche des Formhohlraumes sind als Gegenstücke zu dem weiter oben genannten kreisringförmigen Profil (Bereiche 18, 19) und rechteckförmigen Profil (seitliche Abschnitte 8, 9) ausgebildet. Auch die "Negative" zu den Aufnahmen 12 bis 17 sind im oberen Teil 34 bzw. unteren Teil 33 der Form enthalten.

Beim plastischen Verformen des Rohrmaterials kann Material seitlich unter hohem mechanischen Druck nachgeschoben werden, wodurch die Beeinflussung der Wandstärke des Grundkörpers 1 möglich ist.

Nach erfolgter Umformung (also wenn das Material exakt am Formhohlraum anliegt) kann der hydraulische Innendruck nochmals erhöht werden. Dadurch ist es möglich, die Gefügestruktur des Grundmaterials positiv zu beeinflussen bzw. sogar einen Härtungsprozeß durchzuführen. Somit ist die Qualität eines preisgünstigen Ausgangsmaterials verbesserbar.

Nach Abschluß des hydraulischen Innenhochdruck-Umformens ist die Hydraulikflüssigkeit aus dem Grundkörper zu pumpen und er kann aus der Form entnommen werden. Zur Erleichterung der Entnahme ist der Flügel 20 des sternförmigen Querschnittsprofils leicht keilförmig gestaltet. Ein ungewollter Verschleiß des oberen Teils 34 der Form sowie Riefenbildungen am Grundkörper 1 werden somit vermieden.

Die ursprünglich für die Abdichtung erforderlichen Enden des Grundkörpers 1 können nunmehr abgetrennt werden. Nach Verschweißung der Trägerplatten 28, 29, der Schweißmuttern 25 sowie der Halterungen 2, 3 ist der vergleichsweise einfache, aber sehr genaue Herstellungsprozeß der Hinterachse beendet. Sie ist funktionell optimiert, besonders leicht und entspricht allen Anforderungen an die Festigkeit.

## Patentansprüche

1. Geschweißte Kraftfahrzeug-Hinterachse, bestehend aus zumindest einem, elastisch an einem Wagenkasten anlenkbaren Grundkörper (1) und aus am Grundkörper (1) verschweißten Radträgern (10, 11) sowie mit am Grundkörper (1) vorgesehenen Aufnahmen (12 bis 17) für weitere, die Achsbewegungen bestimmende Bauelemente, wie Schenkel, Lenker, Stoßdämpfer oder Federn, **dadurch gekennzeichnet**, daß der Grundkörper (1) ein mittels hydraulischem Innenhochdruck-Umformverfahrens in die Endform überführter, die Aufnahmen (12 bis 17) enthaltender Hohlkörper mit nicht konstanter Wandstärke und Querschnittgeometrie ist, wobei die Wandstärke des Grundkörpers (1) im Bereich zumindest einer Aufnahme (14, 15) größer ist als in den übrigen Bereichen (7, 18, 19) bzw. Abschnitten (8, 9).

2. Geschweißte Kraftfahrzeug-Hinterachse nach Anspruch 1, **dadurch gekennzeichnet,** daß der Querschnitt des Grundkörpers (1) über seine gesamte Länge, auch in Bereichen von Querschnittsübergängen, homogen ist.

3. Geschweißte Kraftfahrzeug-Hinterachse nach Anspruch 1 und 2, **dadurch gekennzeichnet,** daß der Grundkörper (1) endseitig Aufnahmen (12, 13), an denen jeweils ein Radträger (10, 11) verschweißbar ist, aufweist, wobei diese Aufnahmen (12, 13) ebenflächig oder bauchig ausgeführt sind.

4. Geschweißte Kraftfahrzeug-Hinterachse nach den Ansprüchen 1 bis 3, **dadurch gekennzeichnet,** daß der Grundkörper (1) durch an sich bekanntes hydraulisches Innenhochdruck-Umformen eines grob vorgebogenen Rohres (32) mit kreisringförmiger Querschnittsfläche entstanden ist.

5. Geschweißte Kraftfahrzeug-Hinterachse nach den Ansprüchen 1 bis 4, **dadurch gekennzeichnet,** daß der Grundkörper (1) zur endseitigen Halterung der Radträger (10, 11) in seinem mittleren Bereich (7) eine biegesteife aber verdrehweiche Querschnittsfläche aufweist, die durch an sich bekanntes mechanisches Pressen in Kombination mit hydraulischem Innenhochdruck-Umformen erzeugt ist.

6. Geschweißte Kraftfahrzeug-Hinterachse nach zumindest einem der Ansprüche 1 bis 5, **dadurch gekennzeichnet,** daß der Grundkörper (1) zur endseitigen Halterung der Radträger (10, 11) in seinem mittleren Bereich (7) eine biegesteife aber verdrehweiche Querschnittsfläche aufweist, wobei diese bereits vor dem hydraulischen Innenhochdruck-Umformen durch an sich bekannte Umformverfahren aus einem Rohr mit kreisringförmigen Querschnitt erzeugt wurde und beim hydraulischen Innenhochdruck-Umformen erhalten bleibt.

## Claims

1. Welded motor vehicle rear axle, consisting of at least one main element (1) which can be linked resiliently to a van body and wheel carriers (10, 11) welded to the main element (1) as well as with receptacles (12 to 17) provided on the main element (1) for additional structural members which determine the axle movements such as legs, control arms, shock absorbers or springs, characterised in that the main element (1) is a hollow body of non-constant wall thickness and cross-sectional geometry which is converted to the final shape by the hydraulic internal high-pressure forming method and which contains the receptacles (12 to 17), wherein the wall thickness of the main element (1) is greater in the region of at least one receptacle (14, 15) than in the other regions (7, 18, 19) or sections (8, 9).

2. Welded motor vehicle rear axle according to claim 1, characterised in that the cross-section of the main element (1) is homogeneous over its whole length, even in regions of cross-sectional transitions.

3. Welded motor vehicle rear axle according to claims 1 and 2, characterised in that the main element (1) at the ends comprises receptacles (12, 13) to each of which can be welded a wheel carrier (10, 11), these receptacles (12, 13) being of flat-surfaced or bulging construction.

4. Welded motor vehicle rear axle according to claims 1 to 3, characterised in that the main element (1) has been produced by hydraulic internal high-pressure forming, known in the art, of a roughly prebent tube (32) of annular cross-sectional area.

5. Welded motor vehicle rear axle according to claims 1 to 4, characterised in that the main element (1) for supporting the wheel carriers (10, 11) at the ends has in its central region (7) a bending-resistant but twistable cross-sectional area which is produced by mechanical pressing, known in the art, in combination with hydraulic internal high-pressure forming.

6. Welded motor vehicle rear axle according to one or more claims 1 to 5, characterised in that the main element (1) for supporting the wheel carriers (10, 11) at the ends has in its central region (7) a bending-resistant but twistable cross-sectional area, wherein the latter has already been produced from a tube of annular cross-section before hydraulic internal high-pressure forming by forming methods known in the art, and is preserved during hydraulic internal high-pressure forming.

## Revendications

1. Essieu arrière soudé de véhicule automobile, comportant au moins un corps de base (1) lié de manière élastique à une caisse de véhicule et des supports de roues (10, 11) soudés sur le corps de base (1) ainsi que des moyens de support (12 à 17) prévus sur le corps de base (1) pour des éléments supplémentaires qui agissent sur les déplacements de l'essieu, tels que des fusées d'essieu, des bielles d'asservissement d'essieu, des amortisseurs ou des ressorts, caractérisé par le fait que le corps de base (1) est un corps creux contenant les moyens de support (12 à 17), amené sous sa forme finale par un procédé de formage hydraulique à haute pression intérieure, avec une épaisseur de paroi et une géométrie en section transversale non constantes, l'épaisseur de paroi du corps de base (1) dans la région d'au moins un moyen de support (14, 15) étant plus importante que dans les autres régions (7, 18, 19) ou les autres tronçons (8, 9).

2. Essieu arrière soudé de véhicule automobile selon la revendication 1, caractérisé par le fait que la section transversale du corps de base (1) est homogène sur toute sa longueur, même dans les zones de changement de section.

3. Essieu arrière soudé de véhicule automobile selon les revendications 1 et 2, caractérisé par le fait que le corps de base (1) comporte à ses extrémités des moyens de support (12, 13) sur chacun desquels est soudé un support de roue (10, 11), ces moyens de support (12, 13) étant plans ou bombés.

4. Essieu arrière soudé de véhicule automobile selon les revendications 1 à 3, caractérisé par le fait que le corps de base (1) est obtenu de manière connue par formage hydraulique à haute pression intérieure d'un tube (32) à section transversale circulaire avec des coudes ébauchés.

5. Essieu arrière soudé de véhicule automobile selon les revendications 1 à 4, caractérisé par le fait que le corps de base (1) présente, par rapport à l'attache des supports de roue (10, 11) située côté extrémité, dans sa région médiane (7) une section transversale rigide en flexion mais souple en torsion qui est obtenue de manière connue par formage mécanique à la presse combiné à un formage hydraulique à haute pression intérieure.

6. Essieu arrière soudé de véhicule automobile selon les revendications 1 à 5, caractérisé par le fait que le corps de base (1) présente, par rapport à l'attache des supports de roue (10, 11) située côté extrémité, dans sa région médiane (7) une section transversale rigide en flexion mais souple en torsion, cette section étant produite par formage par un procédé connu en soi d'un tube à section circulaire avant l'opération de formage hydraulique à haute pression intérieure et étant conservée lors de l'opération de formage hydraulique à haute pression intérieure.
